# EUROPEAN PATENT APPLICATION

(11) **EP 2 562 582 A2**
(43) Date of publication of application: **27.02.2013**
(21) Application number: 11772237.1
(22) Date of filing: 21.04.2011
(51) Int. Cl.: G02B 27/22, H04N 13/00, H04N 5/225

(54) **MONOSCOPIC 3D IMAGE PHOTOGRAPHING DEVICE AND 3D CAMERA**

(30) Priority: 21.04.2010 KR 20100036748
(71) Applicant: Kim, Seong-do, Seocho-gu, Seoul 137-838 (KR)
(72) Inventor: Kim, Seong-do, Seocho-gu, Seoul 137-838 (KR)
(74) Representative: Franke, Dirk
(86) International application number: PCT/KR2011/002859
(87) International publication number: WO 2011/132949

(57) **Abstract**

The present invention relates to a device and a 3D camera for photographing a 3D image which can be viewed in a monoscopic manner without three-dimensional glasses by using an existing camera, and more specifically, to a device and a 3D camera for photographing a 3D image which can be viewed with the naked eye without installing any device in front of a lens of the existing camera, and to a 3D image photographing device and a 3D camera for providing a 3D image in which an image with the same picture quality and the same brightness as an existing 2D image can be viewed even without glasses or a tool of a special display. To this end, the present invention provides: a device which rotates a monoscopic camera so that an image is photographed at various angles on various frames within one second by rotating the existing camera by 360 degrees toward a front subject in order to photograph the subject; and a 3D camera having an embedded device in which a lens of the camera is rotated by 360 degrees toward the front subject. Further, the present invention provides a 3D image photographing device and a 3D camera which enable free adjustment of a rotational width of the monoscopic lens and thus free adjustment of the depth of horizontal and vertical images when photographing the images, thereby solving eyestrain and dizziness which may occur when the 3D image is viewed.

## Description

### Technical Field

The present invention relates, in general, to a device for producing a 3D image that can be viewed without three-dimensional glasses using an existing monoscopic lens and a 3D camera and, more particularly, to a 3D image photographing device and a 3D camera, in which an existing monoscopic camera photographs a front subject while rotating 360 degrees toward the subject to allow an image to be photographed at various angles on respective frames, thus enabling the brain to recognize a 3D image with the naked eye without having to wear three-dimensional glasses.

### Background Art

Generally, until now, a device or camera capable of photographing a 3D image has not used a monoscopic device or camera but has used a binocular device or camera. Even if the monoscopic device or camera is used, the 3D image photographing device or camera requires three-dimensional glasses when viewing the 3D image. Further, since a mirror, a prism or a half mirror should be used in front of a lens of the camera, the configuration of the above device or camera is complicated and inconvenient.

The prior art is problematic in that it suffers difficulty in dividing an image into left and right images at the time of being photographed and also three-dimensional glasses are required to view the image. Moreover, a method using two cameras and a method of installing a separate mirror or prism in front of the existing camera are problematic in that it is difficult to reduce the depth of left and right images by the space of an interval between the two eyes of a person due to the size of the camera lens itself, so that the depth of the left and right images is excessively increased, thus causing eyestrain and dizziness. In order to reduce the depth of the left and right images, an orthogonal type is used. However, this also uses a half mirror, so that incident light is reduced by halves, and thus the picture quality may be deteriorated. Such a binocular 3D image photographing device or camera is problematic in that it is difficult to keep the picture qualities of the images incident to two cameras constant, and it also being difficult to identically match the zoom functions of the two cameras.

### Disclosure

### Technical Problem

Accordingly, the present invention provides a 3D image photographing device and a 3D camera for photographing a 3D image which can be viewed without three-dimensional glasses using an existing monoscopic camera. In other words, an object of the present invention is to provide a monoscopic 3D image photographing device and a monoscopic 3D camera, in which no device or tool is installed in front of a lens of the monoscopic camera with one lens, and the 3D image is photographed in a multi-view photographing manner by rotating the camera lens 360 degrees, thus photographing the 3D image that can be viewed with the naked eye without using the glasses.

### Technical Solution

In order to accomplish the above object, the present invention provides a 3D image photographing device and a 3D camera for photographing a 3D image that can be viewed with the naked eye without using three-dimensional glasses, in the same picture quality as a 2D image. The invention is characterized in that no tool is installed in front of a camera lens, and the camera lens photographs an image while rotating 360 degrees toward a front subject, thus allowing the 3D image to be photographed in the same picture quality as when photographing the 2D image. Further, it is possible to adjust the diameter of a rotary connecting bar equipped with the camera lens so as to reduce or increase the rotational width of the camera lens as desired, thus reducing the horizontal and vertical depths of the 3D image as desired and thereby overcoming eyestrain and dizziness that may be caused when viewing the 3D image.

### Advantageous Effects

The present invention is advantageous in that it solves the problems of the existing binocular 3D image photographing device, that is, a difference in color between left and right images and the difficulty of simultaneously photographing the left and right images. It can also solve the unclear picture quality unlike the 2D image and the problem of requiring three-dimensional glasses when viewing a 3D image. Further, the invention allows the rotational width of the camera lens to be reduced as desired while photographing the 3D image with the same quantity of incident light as when photographing the 2D image, thus enabling the depth of horizontal and vertical images to be reduced as desired, and being capable of photographing the 3D image that has the same picture quality and brightness as the 2D image, thereby overcoming eyestrain and dizziness. Furthermore, since three-dimensional glasses are not required, the invention is economical, and since it is possible to enjoy the 3D image with an existing display without the necessity of purchasing a special display or monitor, the present invention is advantageous in terms of preserving the environment and conserving energy. Since there is no problem of the left and right images being reversed, it is convenient to photograph the 3D image. Further, even when editing the image, a special method is not required, so that an existing editing technology and editor can be utilized without being modified, and thus the invention is very economical.

### Description of Drawings

FIG. 1 is a view showing a configuration of a monoscopic 3D image photographing device, in which a camera is mounted to a rotary connecting bar connecting two rotary tracks of the same size;
FIG. 2 is a sectional view of the monoscopic 3D image photographing device shown in FIG. 1;
FIG. 3 is a view illustrating the rotation of the camera mounted to the rotary connecting bar connecting the two rotary tracks of the monoscopic 3D image photographing device of FIG. 1;
FIG. 4 is a view illustrating the movement of a connecting pin of the rotary connecting bar to pairs of rotary tracks of different sizes, in the monoscopic 3D image photographing device having several pairs of rotary tracks of different sizes;
FIG. 5 is a view showing a configuration of a monoscopic 3D camera containing the 3D image photographing device in which a rotary connecting bar equipped with a camera lens rotates on two rotary tracks of the same size; and
FIG. 6 is a view illustrating a monoscopic 3D camera that photographs a front subject in a 3D manner while a lens of the camera is rotated at 360 degrees merely by one rotary track.

### Best Mode

The present invention will be described in detail with reference to the accompanying drawings.

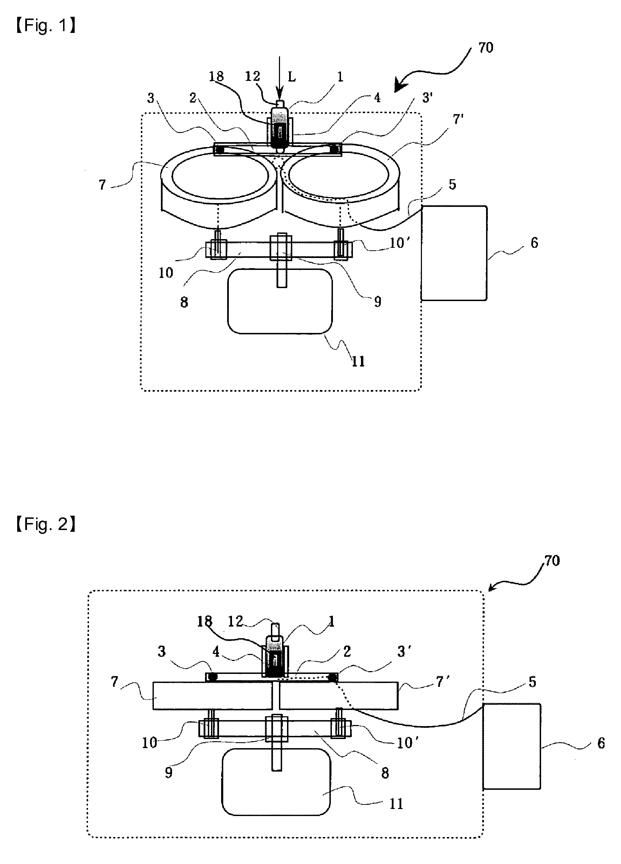

FIG. 1 is a view showing the configuration of a 3D image photographing device 70. This device is configured so that a rotary connecting bar 2 equipped with a camera 1 by a camera support 4 is connected to two rotary tracks 7 and 7' via connecting pins 3 and 3', and a shaft 9 of a motor 11 is connected to two shafts 10 and 10' of the two rotary tracks 7 and 7' via a rotary belt 8. Thus, when the rotating shaft 9 of the motor 11 rotates, a lens 12 of the camera 1 rotates 360 degrees toward a front subject to photograph a 3D image. The image can be seen by a viewfinder 6 with a lead 5 or a wireless viewfinder.

If the rotating shaft 9 of the motor 11 rotates, the two rotating shafts 10 and 10' and the two rotary tracks 7 and 7' are rotated by the rotary belt 8. Simultaneously, the rotary connecting bar 2 connected to the left rotary track 7 and the right rotary track 7' by the connecting pins 3 and 3' is also rotated. Also, the camera 1 mounted to the rotary connecting bar 2 by the camera support 4 rotates 360 degrees, so that incident light L of the front subject is incident on the camera lens 12 in multi-views and thus the image is photographed on respective frames 18 at various angles. As a result, a 3D image that can be recognized by the brain is photographed. When the lens 12 of the camera 1 mounted to the rotary connecting bar 2 rotates 360 degrees toward the subject once per second, images L of different angles that are photographed while the lens rotates 360 degrees per second are incident into every frame. Thus, the images of various angles of respective frames are synthesized in the brain, thus allowing the synthesized images to be viewed as a 3D image.

If the camera 1 is rotated by only one rotary track that is directly connected to the rotating shaft 9 of the motor 11 without the rotary connecting bar 2, the lens 12 of the camera 1 is turned upside down during the rotation of the camera, an inverse image and an erect image may be alternately incident as the camera rotates. However, the present invention solves such a problem. Thus, the lens 12 of the camera 1 is rotated 360 degrees by the rotary connecting bar 2 connected to one pair of rotary tracks 7 and 7' that have the same size and are simultaneously rotated at the same speed by the same motor 11, so that the camera 1 and the lens 12 are always kept erect even during the rotation, thus preventing the image L from being flipped. Hence, the present invention provides the 3D image photographing device 70 that can photograph the 3D image using an existing general 2D camera.

FIG. 2 is a sectional view showing the 3D image photographing device 70 of FIG. 1. Referring to the drawing, as the two rotating shafts 10 and 10' are rotatably connected to the rotating shaft 9 of the motor 11 by the rotary belt 8, the two rotary tracks 7 and 7' are rotated and simultaneously the rotary connecting bar 2 connected to the rotary tracks 7 and 7' by the connecting pins 3 and 3' is also rotated. Further, the camera 1 and the lens 12 mounted to the rotary connecting bar 2 rotate while being kept erect.

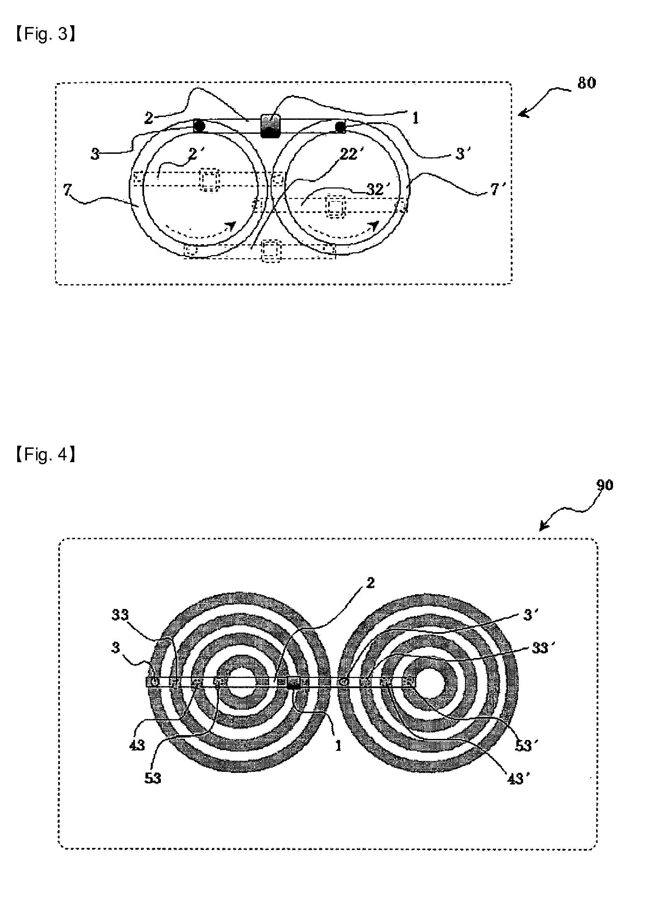

FIG. 3 shows a state 80 wherein the rotary connecting bar 2 equipped with the camera 1 is connected to the rotary tracks 7 and 7' by the connecting pins 3 and 3' and is rotated on the rotary tracks 7 and 7'. When the rotating shaft 9 of the motor 11 rotates and thus both the rotating shafts 10 and 10' are rotated by the rotary belt 8, the rotary connecting bar 2 connecting the two rotary tracks 7 and 7' to each other also rotates. The drawing illustrates the state wherein the rotary connecting bar 2 rotates in the direction 2' of 9 o'clock, the direction 22' of 6 o'clock and the direction 32' of 3 o'clock. In order to prevent the image of the incident light L entering the lens 12 of the camera 1 from being turned upside down during the rotation, the rotary connecting bar 2 connected to the two rotary tracks 7 and 7' of the same rotational width rotates while maintaining the vertical and horizontal states even during the rotation, thus preventing the image L from being flipped when the lens 12 of the camera 1 mounted to the rotary connecting bar 2 photographs the front subject while rotating 360 degrees.

FIG. 4 shows the state 90 wherein the connecting pins 3 and 3' of the rotary connecting bar 2 are freely movable to a first pair of connecting pins 33 and 33', a second pair of connecting pins 43 and 43' and a third pair of connecting pins 53 and 53' while sliding on the rotary connecting bar 2. As the connecting pins 3 and 3' of the rotary connecting bar 2 move from the pair of rotary tracks located at an outer position to the pair of rotary tracks 53 and 53' located at the innermost position, the rotational width of the lens 12 of the camera 1 is reduced. In other words, as the pair of connecting pins 3 and 3' moves from the leftmost rotary tracks to the rightmost rotary tracks 53 and 53', the rotational width of the camera 1 is gradually reduced, so that a depth of the image L photographed on each image frame 18 becomes gradually narrower. Accordingly, the three-dimensional effect of the 3D image can be adjusted and moreover it is possible to reduce eyestrain and dizziness that may be experienced when looking at the 3D image.

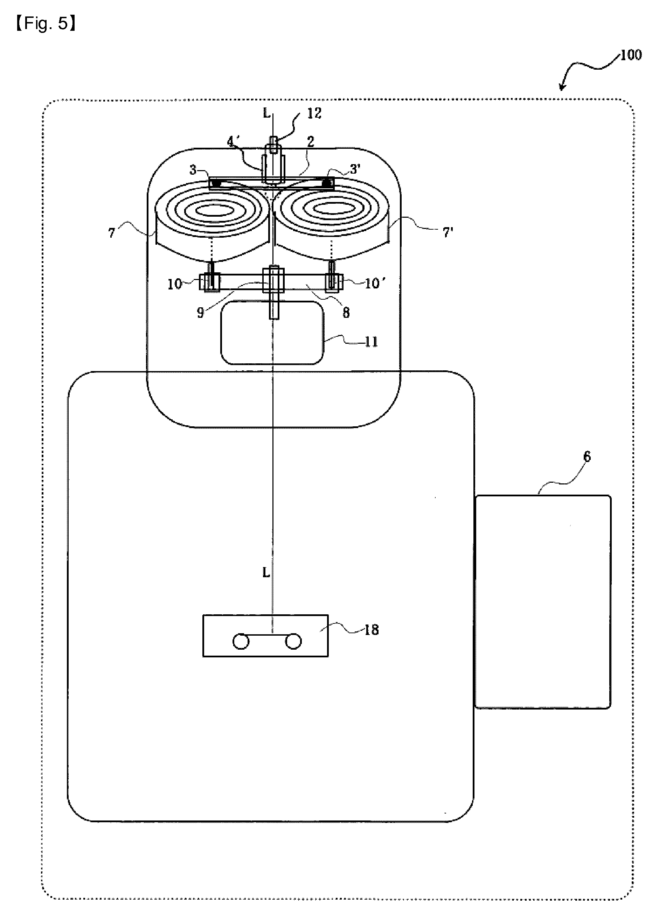

FIG. 5 shows an embodiment of the 3D camera 100 in which the 3D image photographing device 70 of FIG. 1 is embedded. That is, since the 3D image photographing device 70 of FIG. 1 is embedded in the 3D camera 100, the camera lens 12 photographs the image L while rotating 360 degrees toward the front subject. Further, the 3D image photographing camera 100 photographs the image L in multi-views on every frame 18 to allow the brain to recognize the 3D image. If the rotating shaft 9 of the motor 11 installed in the camera rotates, the left and right rotating shafts 10 and 10' and the left and right rotary tracks 7 and 7' are rotated by the rotary belt 8, the rotary connecting bar 2 connected to one pair of rotary tracks 7 and 7' having the same rotational width is also rotated, and the camera lens 12 mounted to the rotary connecting bar 2 via the lens support 4' also rotates 360 degrees, thus photographing the image L of the front subject in the 3D image of multi-views. The connecting pins 3 and 3' connecting the rotary connecting bar 2 with the rotary tracks 7 and 7' slide on the rotary connecting bar 2 such that the connecting pins may move to the first pair of rotary tracks 33 and 33', the second pair of rotary tracks 43 and 43', and the third pair of rotary tracks 53 and 53', the rotational widths of which are gradually reduced. Therefore, it is possible to photograph the 3D image by adjusting the depth of the image L incident into every frame 18 with the movement of the connecting pins 3 and 3' on the rotary connecting bar 2 while viewing the photographed 3D image through the viewfinder 6.

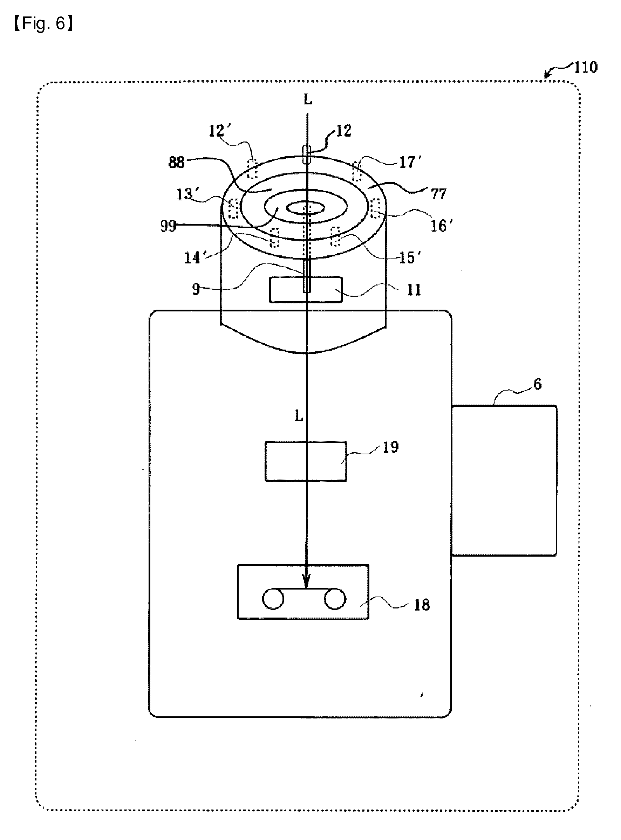

FIG. 6 shows a new embodiment of a 3D camera 110, in which the lens 12 of the camera rotating 360 degrees by one rotary track 77 directly connected to the rotating shaft 9 of the motor 11 photographs the image L on every frame 18 in multi-views toward the front subject, thus allowing the brain to recognize the 3D image. In other words, if the rotating shaft 9 of the motor 11 installed in the 3D camera 110 rotates, the rotary track 77 and the camera lens 12 on the rotary track rotate 360 degrees in the direction 12' of 10:30, the direction 13' of 9 o'clock, the direction 14' of 7:30, the direction 15' of 4:30, the direction 16' of 3 o'clock, and the direction 17' of 1:30 to photograph the image L of the front subject at various angles and thereby allow the image L to be incident at various angles on several frames. In this way, the 3D camera 110 is implemented to photograph the 3D image that can be recognized in 3D by the brain. The camera lens 12 on the rotary track 77 is allowed to move to a rotary track 88 located at the inner position and a rotary track 99 having a smaller rotational width, so that it is possible to photograph the 3D image while viewing the 3D image through the viewfinder 6 and adjusting the depth of the 3D image. The 3D camera 110 according to the embodiment of FIG. 6 enables the image L to be photographed in the erect state even if the camera lens 12 is turned upside down, so that the 3D image can be photographed even by the camera lens 12 on one rotary track 77, 88, 99 that is directly connected to the rotating shaft 9 of the motor 11. That is, there is provided the 3D camera 110 that has a circuit 19 recording the image L in the erect state even if the lens is turned upside down.

## Claims

1. A monoscopic 3D image photographing device (70) adapted to photograph a 3D image of a subject in a monoscopic manner, comprising:
a motor (11);
two rotary tracks (7, 7') rotated by the motor (11) and having the same size;
a rotary belt (8) connecting a rotating shaft (9) of the motor to two rotating shafts (10, 10') of the two rotary tracks (7, 7');
a rotary connecting bar (2) connected to the two rotary tracks (7, 7') and rotated along with the two rotary tracks (7, 7'), with a camera (1) being mounted to the rotary connecting bar;
connecting pins (3, 3') connecting the rotary connecting bar (2) to the two rotary tracks (7, 7');
a camera support (4) connecting the camera (1) to the rotary connecting bar (2); and
a viewfinder (6).

2. The monoscopic 3D image photographing device (70) according to claim 1, further comprising:
pairs of rotary tracks (33-33', 43-43', 53-53') of different sizes provided in the two rotary tracks (7, 7') to enable a rotary width of the rotary connecting bar (2) to be adjusted, the connecting pins (3, 3') of the rotary connecting bar (2) being movable to the pairs of rotary tracks.

3. A monoscopic 3D camera (100) including a 3D image photographing device according to claim 1, the 3D camera photographing a 3D image while one camera lens rotates 360 degrees toward a front subject, the 3D camera comprising:
a camera lens (12);
a motor (11);
two rotary tracks (7, 7') rotated by the motor (11) and having the same size;
a rotary belt (8) connecting a rotating shaft (9) of the motor to two rotating shafts (10, 10') of the two rotary tracks (7, 7');
a rotary connecting bar (2) connected to the two rotary tracks (7, 7') and rotated along with the two rotary tracks (7, 7'), with the camera lens (12) being rotatably mounted to the rotary connecting bar;
connecting pins (3, 3') connecting the rotary connecting bar (2) to the two rotary tracks (7, 7');
a lens support (4) connecting the camera lens (12) to the rotary connecting bar (2); and
a viewfinder (6).

4. The monoscopic 3D camera (100) according to claim 3, further comprising:
pairs of rotary tracks (33-33', 43-43', 53-53') of different sizes provided in the two rotary tracks (7, 7') to enable a rotary width of the rotary connecting bar (2) to be adjusted, the connecting pins (3, 3') of the rotary connecting bar (2) being movable to the pairs of rotary tracks.

5. The monoscopic 3D camera (100) according to claim 3, wherein the 3D camera photographs a 3D image while one camera lens rotates 360 degrees toward a front subject along one rotary track, and comprises:
a camera lens (12);
a motor (11);
one rotary track (77) rotated by the motor (11);
a circuit (19) recording an image (L) in an erected state even if the lens (12) is turned upside down; and
a viewfinder (6).

6. The monoscopic 3D camera (100) according to claim 5, further comprising:
rotary tracks (88, 99) of different sizes provided in one rotary track (77) to enable a rotary width of the camera lens (12) to be adjusted, the camera lens (12) being movable to the rotary tracks.
